# EUROPÄISCHE PATENTANMELDUNG

(11) **EP 1 284 391 A1**
(43) Veröffentlichungstag der Anmeldung: **19.02.2003**
(21) Anmeldenummer: 01119559.1
(22) Anmeldetag: 14.08.2001
(51) Int. Cl.: F23R 3/00, F01D 9/02

(54) **Brennkammeranordnung für Gasturbinen**

(71) Anmelder: SIEMENS AKTIENGESELLSCHAFT, 80333 München (DE)
(72) Erfinder: Tiemann, Peter, 58452 Witten (DE)

(57) **Zusammenfassung**

Um eine Brennkammeranordnung (1) für Gasturbinen mit einer Vielzahl von in einer gemeinsamen Ringbrennkammer (3) mündenden, kreisförmig angeordneten Einzelbrennkammern (2) dahingehend weiterzuentwickeln, daß sie unter Einsatz von konvektiver Kühlung mit hoher Effizienz gekühlt werden kann, wobei auf den Einsatz einer Prallkühlung weitestgehend verzichtet werden soll, wird mit der Erfindung vorgeschlagen, daß bei einer solchen Brennkammeranordnung (1) die Ringbrennkammer (3) im Übergangsbereich zu den Einzelbrennkammern (2) eine periodisch wechselnde Höhe aufweist, die im Bereich zwischen benachbarten Einzelbrennkammern (2) minimal ist.

## Beschreibung

Die Erfindung betrifft eine Brennkammeranordnung für Gasturbinen mit einer Vielzahl von in einer gemeinsamen Ringbrennkammer mündenden, kreisförmig angeordneten Einzelbrennkammern. Die Erfindung betrifft weiterhin eine Gasturbine mit einer erfindungsgemäß aufgebauten Brennkammeranordnung.

Gasturbinen finden breite Anwendung sowohl auf dem Gebiet der Stromerzeugung als auch als Antriebsmittel für Strahlflugzeuge. In Gasturbinen wird ein Luft-Brennstoff-Gemisch in einem Brennraum gezündet, und der aus der Verbrennung entstehende Heißgasstrom expandiert in einen Turbinenraum. Dort trifft der Heißgasstrom auf eine aus Leitschaufeln und Turbinenschaufeln bestehende Anordnung und versetzt die an einer Welle angeordneten Turbinenschaufeln und damit die Welle selbst in Rotation. Mit Hilfe der so generierten Rotationsenergie kann nun beispielsweise ein Generator zur Stromerzeugung betrieben werden.

Da bei der Verbrennung des Luft-Brennstroff-Gemisches hohe Temperaturen auftreten, die bei modernen, hocheffizienten Gasturbinen Temperaturen von etwa 2.000°C übersteigen können, muß die Turbine im Bereich des Brennraumes ebenso wie in strömungstechnisch nachfolgenden Bereichen gekühlt werden, um ein Überhitzen und damit eine Zerstörung des Turbinenmaterials zu vermeiden.

Sowohl für den Aufbau des Brennraumes als auch für die erforderliche Kühlung sind unterschiedliche Lösungsansätze bekannt. Bezüglich des Aufbaus des Brennraumes ist es einerseits bekannt, eine durchgehende Ringbrennkammer in Form eines geschlossenen Ringraumes vorzusehen, welche über einen ringförmigen Spalt in einen ersten Turbinenraum mündet. In der Ringbrennkammer wird das Luft-Brennstoff-Gemisch gezündet, und es entsteht ein ringförmiger Heißgasstrom, welcher durch den Spalt in den Turbinenraum übergeht und dort die Turbinenschaufeln antreibt. Problematisch bei einer derartigen Lösung ist neben ungewollten und Lärm erzeugenden Fluktuationen in der Verbrennung die räumliche Beschränkung der Ringbrennkammer. Da die Ringbrennkammer vollständig in dem Turbinengehäuse untergebracht ist, ist eine Volumenerweiterung der Brennkammer nicht bzw. nur unter erheblichem konstruktiven Aufwand möglich. Eine solche Volumenerweiterung ist jedoch für die Anwendung fortschrittlicher Verbrennungskonzepte wünschenswert.

Eine alternative, mögliche Konfiguration für den Brennraum besteht in einer mehrteiligen Lösung. Mehrere Einzelbrennkammern (sogenannte Can-Brennkammern) werden kreisförmig um einen Ringraum angeordnet, in den die Einzelbrennkammern münden. Der Ringraum dient als nachgeschaltete Ringbrennkammer, so daß die eigentliche Verbrennung zweiteilig erfolgt. Ein Luft-Brennstoff-Gemisch wird in jede einzelne der Einzelbrennkammern eingegeben und in der Einzelbrennkammer gezündet. Die Verbrennung beginnt dann in der Einzelbrennkammer und setzt sich über einen Übergangsbereich in die Ringbrennkammer fort. In der Ringbrennkammer werden die Gasströme aus der Einzelbrennkammer zu einem ringförmigen Gasstrom zusammengeführt, welcher wiederum zum Antreiben der Turbinenschaufeln in einen Turbinenraum mündet. Ein solches Konzept hat den Vorteil, daß die Verbrennung des Luft-Brennstoff-Gemisches in den einzelnen Einzelbrennkammern initiiert und damit lokal beschränkt durchgeführt und gesteuert werden kann. Dadurch lassen sich unerwünschte Oszillationen in der Verbrennung reduzieren bzw. vermeiden, welche mit einer nicht gewollten Lärmentwicklung verbunden sind. Auch können die Einzelbrennkammern durch das eigentliche Turbinengehäuse hindurch ragen, so daß diese unabhängig vom Turbinendesign gestaltet und nahezu beliebig erweitert werden können. So können die für neue und innovative Verbrennungskonzepte erforderlichen, größeren Brennraumvolumina zur Verfügung gestellt werden, ohne das konstruktive Grundkonzept der Turbinen insbesondere der Turbineneinfassung im Turbinengehäuse vollständig überarbeiten zu müssen.

Moderne Gasturbinen werden im allgemeinen mittels eines Fluidstroms, üblicherweise eines Kühlluftstromes, gekühlt. Dabei finden grundsätzlich zwei verschiedene Konzepte Anwendung. Dies sind zum einen die sogenannte Prallkühlung, bei der ein Kühlfluidstrom auf die zu kühlende Oberfläche geleitet wird und auf diese aufprallt und so zur Kühlung beiträgt. Ein zweites Konzept ist die konvektive Kühlung, bei der ein Kühlfluid die entstehende Wärme aufnimmt und konvektiv abführt. Ein Nachteil der Prallkühlung besteht darin, daß zur Erzeugung des auf die zu kühlende Oberfläche aufprallenden Gasstroms ein Druckgefälle erforderlich ist. Da bei modernen Gasturbinen ein Teil der mit der Turbine gewonnenen Rotationsenergie der Turbinenwelle genutzt wird, um die zur Erzeugung des Luft-Brennstoff-Gemisches erforderliche Luft zu komprimieren, und diese Luft häufig auch als Kühlfluid Verwendung findet, bedeutet es einen Verlust der Turbineneffizienz, wenn zur Kühlung zusätzlich ein Druckabfall zu erzeugen ist. Für eine optimale Verbrennung ist eine unter hohem Druck stehende Zuluft günstig, so daß jeder Druckverlust die Effizienz der Verbrennung mindert. Für eine effektive Prallkühlung ist jedoch ein hoher Druckverlust erforderlich, um einen entsprechenden Luftjet auf die zu kühlende Oberfläche zu leiten. Darüber hinaus werden bei einer hocheffizienten Verbrennung, wie sie mit unter hohem Druck stehender Verbrennungsluft zu erreichen ist, höhere Temperaturen erzeugt, was zu erhöhten Kühlanforderungen führt und damit bei Verwendung der Prallkühlung einen höheren Druckabfall erfordert.

Anders verhält sich dies bei der konvektiven Kühlung, bei der ein hoher Druckabfall zur Erzeugung von Luftjets nicht erforderlich ist. Diese Art der Kühlung ist aus Gesichtspunkten der Turbineneffizienz von Vorteil, jedoch ergeben sich hinsichtlich der Kühleffizienz bei dieser Kühlart Schwierigkeiten. So ist es bei der konvektiven Kühlung erforderlich, daß das Kühlfluid, beispielsweise die zur späteren Verbrennung verwendete Verbrennungszuluft, die einzelnen zu kühlenden Bereiche ungehindert anströmen kann, um einen ausreichenden Kühleffekt zu bewirken. Dies ist bei vielen Brennkammerkonstruktionen aus konstruktiven Gründen nicht durchführbar, so daß häufig auf die die Turbineneffizienz schwächende Prallkühlung zurückgegriffen wird.

Ein Beispiel für die Verwendung von Prallkühlung bei einer Brennkammeranordnung mit in einen Ringraum mündenden Einzelbrennkammern gibt die US 4,719,748. Bei der Prallkühlvorrichtung gemäß dieser Druckschrift wird ein Übergangsbereich zwischen den Einzelbrennkammern und einer Turbinenstufe einer Gasturbine von einer Prallhülse umgeben. Zwischen der Prallhülse und der Wandung des Übergangsbereiches ist ein Zwischenvolumen ausgebildet, und die Prallhülse weist eine Vielzahl von Öffnungen auf. Durch diese Öffnungen strömen Kühlgase in Richtung der Wandung des Übergangsstückes, prallt auf diese auf und besorgt somit die Kühlung. Für ein derartiges Kühlkonzept wird ein hoher Druckabfall zwischen der Außenseite der Prallhülse und dem innen liegenden Volumen benötigt, um Jets der Kühlluft auf die Oberfläche der Wandung des Übergangsbereichs strömen zu lassen und dort durch den Aufprall für eine Kühlung zu sorgen. Dieser Druckverlust verringert, wie oben dargelegt, die Effizienz der Turbine.

Ausgehend von diesem Stand der Technik liegt der Erfindung die **Aufgabe** zugrunde, eine Brennkammeranordnung der eingangs genannten Art dahingehend weiterzuentwickeln, daß sie unter Einsatz von konvektiver Kühlung mit hoher Effizienz gekühlt werden kann, wobei auf den Einsatz einer Prallkühlung weitestgehend verzichtet werden soll.

Zur **Lösung** dieser Aufgabe wird mit der Erfindung vorgeschlagen, daß bei einer Brennkammeranordnung der eingangs genannten Art die Ringbrennkammer in einem Übergangsbereich zu den Einzelbrennkammern eine periodisch wechselnde Höhe aufweist, die im Bereich zwischen benachbarten Einzelbrennkammern minimal ist.

Durch eine derartige Ausbildung der Ringbrennkammer kann eine wesentlich geradlinigere Strömungsführung des Heißgases erreicht werden, wobei sich ein günstiger Übergang aus den Einzelbrennkammern in die nachgeschaltete Ringbrennkammer ergibt. Zudem ergibt eine solche Ausgestaltung des Übergangsbereiches zwischen Ringbrennkammer und Einzelbrennkammern auch außenseitig eine gute Anströmbarkeit für ein zur konvektiven Kühlung eingesetztes Kühlungsfluid.

Zur erfindungsgemäßen Ausbildung des Übergangsbereiches zwischen Einzelbrennkammern und Ringbrennkammer sind die Ringbrennkammer begrenzende Wandungen vorzugsweise wellenförmig ausgebildet. Dabei sind die Wandungen der Ringbrennkammer so angeordnet, daß sich abwechselnd Öffnungen von maximaler und minimaler Höhe in dem Übergangsbereich ergeben.

Eine weitere Glättung und sanfte Umlenkung des Heißgasstromes ergibt sich, wenn die Ringbrennkammer ausgehend von dem mit periodisch wechselnder Höhe ausgebildetem Übergangsbereich in Richtung eines der Brennkammeranordnung strömungstechnisch nachgeschalteten Turbinenraumes stufenlos in einen Ringraum mit in Umfangsrichtung einheitlicher Höhe übergeht. Auf diese Weise werden die aus den einzelnen Einzelbrennkammern im Übergangsbereich in die Ringbrennkammer eintretenden Heißgasströme gleichmäßig verteilt und zu einem einzelnen, ringförmigen Gasstrom homogenisiert. Durch den stufenlosen Übergang kann ein Druckverlust im Inneren der Brennkammeranordnung gering gehalten werden, was das Erreichen einer hohen Turbineneffizienz ermöglicht.

Um eine gezielte Konvektionskühlung erreichen zu können, wird gemäß einer weiteren vorteilhaften Weiterbildung der Erfindung vorgeschlagen die Gehäuse der Brennkammeranordnung zweischalig auszubilden, wobei zwischen einer Innenschale und einer Außenschale ein Spaltraum gelassen ist und wobei die Außenschale in ihrer Form so an die Form der Innenschale angepaßt ist, daß der Abstand zwischen den beiden Gehäuseschalen im wesentlichen gleichbleibend ist. Mit einem derartigen, zweischaligen Aufbau des Gehäuses läßt sich eine gute Führung des zur konvektiven Kühlung eingesetzten Kühlfluids erreichen, wobei aufgrund der Formgebung von Innenschale und Außenschale das zur Kühlung in dem Spaltraum geführte Kühlfluid gleichmäßig alle zu kühlenden Bereiche erreicht und somit eine optimale Kühlung gewährleistet ist. Im Übergangsbereich zwischen der Ringbrennkammer und den Einzelbrennkammern wird aufgrund der Formgebung der Innen- sowie Außenschale des Gehäuses der Spaltraum gleichförmig aus einem Doppelring, der sich beidseitig der Ringbrennkammer erstreckt in die Einzelbrennkammern umgebende Einzelspalträume überführt. Diese Überführung erfolgt stufenlos und in fließenden Übergängen, so daß ein sanftes Überblenden der Kühlfluidströmung ohne erhebliche Druckverluste möglich ist. Die Vermeidung von Druckverlusten auch an dieser Stelle trägt zu einer angestrebt hohen Turbineneffizienz bei.

In einer bevorzugten Ausgestaltung der Ringbrennkammeranordnung schließlich weisen die Einzelbrennkammern einen kreisförmigen Querschnitt auf, sie sind bevorzugt kreiszylindrisch ausgebildet. Eine solche Querschnittsform der Einzelbrennkammern stellt einerseits eine geeignete Geometrie für eine hocheffiziente Verbrennung dar, sie erlaubt andererseits einen gleitenden Übergang der Heißgasströmung aus den so geformten Einzelbrennkammern in die Ringbrennkammer unter Verwendung des oben beschriebenen Übergangsbereichs.

Mit der Erfindung wird schließlich eine neue Gasturbine angegeben, in der eine oben beschriebene Brennkammeranordnung zum Einsatz kommt.

Weitere Vorteile und Merkmale der Erfindung ergeben sich aus der nachfolgenden Beschreibung eines Ausführungsbeispieles unter Bezugnahme auf die beigefügten Zeichnungen. In den Zeichnungen zeigen:
- Figur 1: in perspektivischer, teilweise geschnittener Ansicht eine erfindungsgemäße Brennkammeranordnung mit wellenförmigem Übergangsbereich zwischen Einzelbrennkammern und Ringbrennkammer,
- Figur 2: eine geschnittene Ansicht durch eine erfindungsgemäße Brennkammeranordnung gemäß der Schnittlinie II-II aus Fig. 1, wobei in dieser Fig. weitere, an die Brennkammeranordnung angeflanschte Teile dargestellt sind,
- Figur 3: in perspektivischer Darstellung ein Abschnitt einer Gehäuseinnenschale der Ringbrennkammer der erfindungsgemäßen Brennkammeranordnung sowie
- Figur 4: in perspektivischer Darstellung ein Abschnitt der Außenschale der Ringbrennkammer der erfindungsgemäßen Brennkammeranordnung.

In den Figuren sind gleiche Elemente mit gleichen Bezugszeichen versehen.

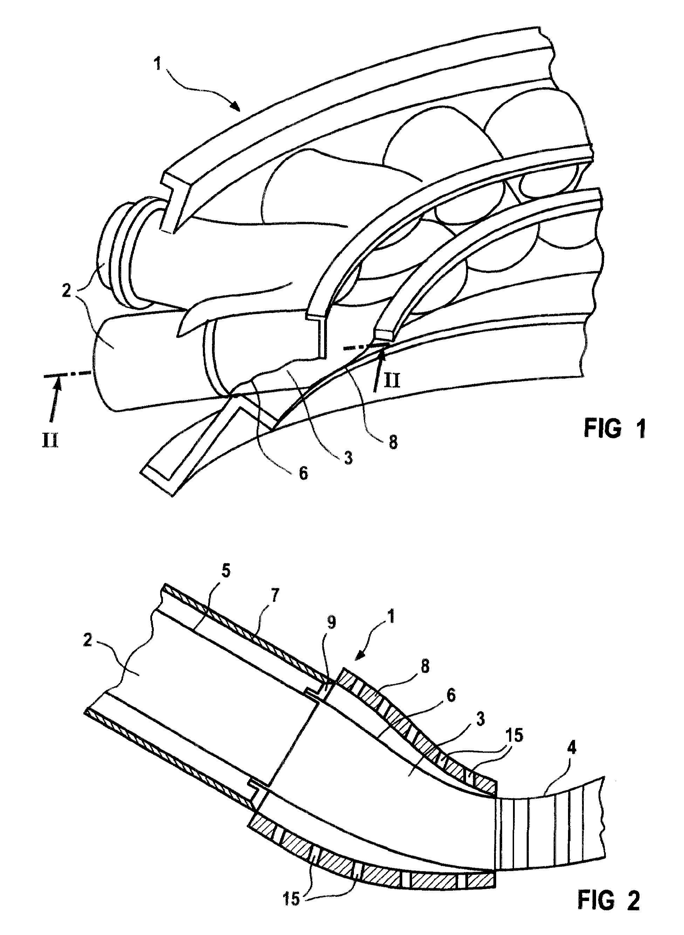

In Figur 1 ist in perspektivischer Ansicht in teilweiser geschnittener Darstellung eine erfindungsgemäße Brennkammeranordnung 1 gezeigt. Eine Vielzahl von im wesentlichen kreisförmig angeordneten, kreiszylindrisch ausgebildeten Einzelbrennkammern 2 mündet in eine gemeinsame Ringbrennkammer 3. Die Ringbrennkammer 3 weist ein zweischaliges Gehäuse mit einer Außenschale 8 und einer Innenschale 6 auf. Auch die Gehäuse der Einzelbrennkammern sind zweischalig aufgebaut mit einer entsprechenden Innenschale 5 und einer Außenschale 7 (siehe Figur 2). Für den Betrieb einer mit der erfindungsgemäßen Brennkammeranordnung 1 ausgestatteten Gasturbine wird in die Einzelbrennkammern 2 jeweils ein Luft-Brennstoff-Gemisch eingegeben und dort gezündet. Die Verbrennung findet dann in einer ersten Stufe in den Einzelbrennkammern 2 statt, zieht sich im folgenden allerdings auch in die gemeinsame Ringbrennkammer 3 hinein.

Das bei der Verbrennung entstehende Heißgas expandiert und breitet sich ausgehend von den Einzelbrennkammern 2 in die Ringbrennkammer 3 und im weiteren Verlauf durch einen austrittsseitig der Ringbrennkammer 3 belassenen Spalt in Richtung eines Turbinenraums 4 (siehe Figur 2) aus, um dort mechanische Energie auf eine Turbinenwelle zu übertragen.

Ein Übergangsbereich zwischen den Einzelbrennkammern 2 und der gemeinsamen Ringbrennkammer 3 ist wellenförmig ausgebildet. Dabei sind sowohl die Innenschale 6 als auch die Außenschale 8 des Ringbrennkammergehäuses wellenförmig geformt. In Richtung des Turbinenraumes geht die wellenförmige Ausformung des Übergangsbereiches über in einen Ringraum mit gleichmäßiger Höhe. Diese Geometrie ermöglicht einen gleichmäßigen Übergang aus den Einzelbrennkammern 2 in die Ringbrennkammer 3 und schließlich in den Turbinenraum 4 (siehe Figur 2). Es läßt sich so ein sehr gleichförmiges Einströmen aus der Brennkammeranordnung 1 in den Turbinenraum 4 erreichen, was einen effizienten Turbinenbetrieb ermöglicht. Insbesondere läßt sich so vermeiden, daß Heißgas an bestimmten Punkten konzentriert in den Turbinenraum eintritt, was zu unerwünschten Temperaturspitzen an diesen Stellen im Turbinenraum führen würde. Eine erhöhte Kühlung der im Turbinenraum befindlichen Schaufeln ist somit nicht erforderlich.

Der zweischalige Aufbau des Gehäuses der Brennkammeranordnung 1 ist in Figur 2 gut zu erkennen. Dort ist in einer der Schnittlinie II-II in Figur 1 entsprechenden Schnittdarstellung ein Schnitt durch die Brennkammeranordnung 1 dargestellt. In dieser Darstellung ist die Brennkammeranordnung 1 in eine Gasturbine integriert. Zu erkennen sind wieder die Einzelbrennkammern 2, die Ringbrennkammer 3 und in dieser Darstellung der Ringbrennkammer 3 strömungstechnisch nachgeschaltet ein Turbinenraum 4. Ringbrennkammer 3 und Einzelbrennkammern 2 sind zweistückig ausgeführt und miteinander verflanscht. Sowohl Ringbrennkammer 3 als auch die Einzelbrennkammern 2 weisen jeweils zweischalig aufgebaute Gehäuse mit einer Innenschale 6 bzw. 5 und eine Außenschale 8 bzw. 7 auf. Zwischen den Innenschalen 5, 6 und den Außenschalen 7, 8 ist ein Spaltraum 9 belassen. Der Spaltraum 9 dient zur Durchleitung eines Kühlfluids, welches durch Öffnungen 15 in der Außenschale 8 des Ringbrennraumes 3 eintritt. Als Kühlfluid dient in diesem Ausführungsbeispiel die für die spätere Verbrennung verwendete Luft. Diese Luft tritt durch die Öffnungen 15 in den Spaltraum 9 ein und strömt entlang der Innenschalen 6 bzw. 5 der Ringbrennkammer 3 bzw. der Einzelbrennkammern 2. Dabei besorgt die dort entlangströmende Luft eine Konvektionskühlung der Brennkammerinnenschale 5, 6 und tritt schließlich vorerwärmt in die Einzelbrennkammern 2 ein.

Durch die wellenförmige Ausbildung von sowohl Innenschale 6 als auch Außenschale 8 der Ringbrennkammer 3 im Übergangsbereich zu den Einzelbrennkammern 2 wird die zur Konvektionskühlung eingesetzte Luft aus einer Doppelringkonfiguration über einen strebig verbundenen Doppelring in viele kleine Ringe im Bereich der Einzelbrennkammern 2 sanft übergeblendet, ohne daß sich strömungstechnisch nachteilige Stufen oder Kanten ergeben. Durch die geometrische Ausgestaltung der Innenschale 6 und der Außenschale 8 und damit des Spaltraumes 9 im Übergangsbereich der Ringbrennkammer 3 zu den Einzelbrennkammern 2 wird die konvektiv kühlende Strömung gleichmäßig an alle zu kühlenden Heißflächen herangeführt, so daß die konvektive Kühlwirkung maximiert wird. Eine Druckverlust maximierende und damit die Turbineneffizienz verringernde Prallkühlung kann somit minimal gehalten werden.

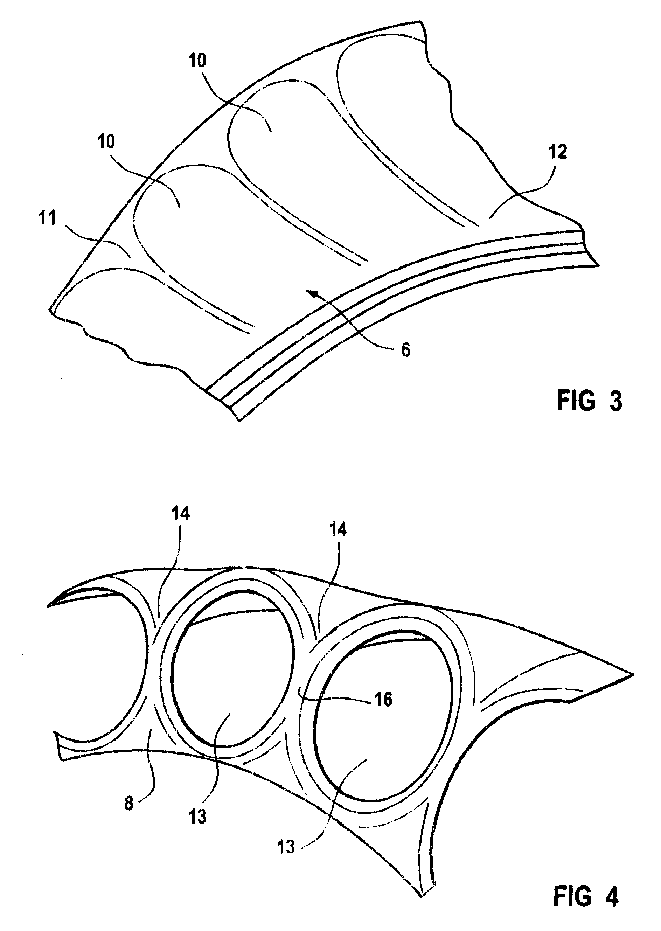

In den Figuren 3 sowie 4 ist jeweils in perspektivischer Darstellung abschnittsweise der Aufbau der Innenschale 6 bzw. der Außenschale 8 der Ringbrennkammer 3 dargestellt. Zu erkennen ist, daß die Innenschale im Übergangsbereich zu den Ringbrennkammern abwechselnd Vertiefungen 10 und Stege 11 aufweist, wobei die Vertiefungen 10 in ihrer Form an die Form der Innenschale 5 der Einzelbrennkammern 2 angepaßt sind. Die Stege 11 stehen zwischen den Einzelbrennkammern. Die Vertiefungen 10 laufen zu einem in Richtung des Turbinenraums gelegenen Ende 12 hin sanft aus, wobei sie flacher und schmaler werden und schließlich in einen Bereich einheitlicher Höhe münden. Dieser Bereich einheitlicher Höhe bildet den in Richtung eines Turbinenraums weisenden Austrittsringspalt.

Bei der perspektivischen Darstellung eines Abschnitts der Außenschale 8 der Ringbrennkammer in Figur 4 lassen sich auf einem Kreisbogen nebeneinander liegend angeordnete, kreisförmige Öffnungen 13 zum Anschluß der kreiszylindrisch geformten Einzelbrennkammern 2 erkennen. Zwischen den Öffnungen 13 sind Einschnürungen 14 zu erkennen, welche in einen schmalen, zwischen den Öffnungen 13 belassenen Steg 16 münden. Die Einschnürungen 14 liegen bei zusammengesetzter Brennkammeranordnung im Bereich der Stege 11. Somit bilden Innenschale 6 und Außenschale 8 im Übergangsbereich der Ringbrennkammer 3 zu den Einzelbrennkammern 2 eine analoge wellenförmige Oberfläche aus unter Belassung eines ebenfalls wellenförmig ausgebildeten Spaltraumes, welcher im Bereich der Öffnung 13 in einzelne, die Einzelbrennkammern 2 umgebende Ringspalte überblendet.

Mit der erfindungsgemäßen Ringbrennkammeranordnung wird einerseits eine homogene und gleichmäßige Heißgasstromführung aus den Einzelbrennkammern über die Ringbrennkammer in den Turbinenraum erreicht, andererseits wird durch die ebenfalls gleichmäßige und sanft geleitete Strömungsführung der Kühlströmung eine maximal effiziente Konvektionskühlung der zu kühlenden Heißfläche der Brennkammeranordnung erzielt, was eine Minimierung der Druckverlust maximierenden und damit die Turbineneffizienz herabsetzende Prallkühlung ermöglicht. Die Erfindung betrifft neben der neuen Brennkammeranordnung ebenfalls eine Gasturbine, welche von dieser Brennkammeranordnung Gebrauch macht.

## Patentansprüche

1. Brennkammeranordnung für Gasturbinen mit einer Vielzahl von in einer gemeinsamen Ringbrennkammer (3) mündenden, im wesentlichen kreisförmig angeordneten Einzelbrennkammern (2), **dadurch gekennzeichnet, daß** die Ringbrennkammer (3) in einem Übergangsbereich zu den Einzelbrennkammern (2) eine periodisch wechselnde Höhe aufweist, die in Bereichen zwischen benachbarten Einzelbrennkammern (2) minimal ist.

2. Brennkammeranordnung nach Anspruch 1, **dadurch gekennzeichnet, dass** die Wandung der Ringbrennkammer (3) im Übergangsbereich zu den Einzelbrennkammern (2) in Umfangsrichtung der Ringbrennkammer (3) wellenförmig ausgebildet ist.

3. Brennkammeranordnung nach einem der Ansprüche 1 oder 2, **dadurch gekennzeichnet, dass** die Form des Innenraumes der Ringbrennkammer (3) ausgehend von dem Übergangsbereich in Richtung eines strömungstechnisch der Ringbrennkammer (3) nachgeschalteten Turbinenraums (4) stufenlos in einen Ringraum mit in Umfangsrichtung einheitlicher Höhe übergeht.

4. Brennkammeranordnung nach einem der voranstehenden Ansprüche, **dadurch gekennzeichnet, dass** das Gehäuse der Brennkammeranordnung zweischalig aufgebaut ist mit einer Innenschale (5, 6) und einer Außenschale (7, 8), wobei Innenschale (5, 6) und Außenschale (7, 8) unter Belastung eines Spaltraumes (9) voneinander beabstandet angeordnet sind und wobei Innenschale (5, 6) und Außenschale (7, 8) unter Einhaltung eines im wesentlichen gleichbleibenden Abstandes im wesentlichen parallel zueinander verlaufen.

5. Brennkammeranordnung nach einem der voranstehenden Ansprüche, **gekennzeichnet durch** Einzelbrennkammern (2) mit kreisförmigen Querschnitten.

6. Brennkammeranordnung nach Anspruch 5, **gekennzeichnet durch** Einzelbrennkammern (2) von kreiszylindrischer Form.

7. Gasturbine, **gekennzeichnet durch** eine Brennkammeranorndung (1) nach einem der Ansprüche 1 bis 6.
